# EUROPÄISCHE PATENTSCHRIFT

(11) **EP 1 649 435 B1**
(45) Veröffentlichungstag und Bekanntmachung des Hinweises auf die Patenterteilung: **03.01.2007**
(21) Anmeldenummer: 04762499.4
(22) Anmeldetag: 20.07.2004
(51) Int. Cl.: G08C 19/02, G01R 31/02, G01R 31/28

(54) **SCHALTUNGSANORDNUNG MIT EINER MEHRDRAHTLEITUNG ZUR STROMVERSORGUNG UND SIGNALAUSGABE**
CIRCUIT ARRANGEMENT COMPRISING A MULTI-WIRE LINE FOR SUPPLYING CURRENT AND EMITTING SIGNALS
ENSEMBLE CIRCUIT A LIGNE MULTIFILAIRE POUR L'ALIMENTATION EN COURANT ET L'ENVOI DE SIGNAUX

(30) Priorität: 01.08.2003 DE 10336055
(43) Veröffentlichungstag der Anmeldung: 26.04.2006
(73) Patentinhaber: MSA Auer GmbH, 12059 Berlin (DE)
(72) Erfinder: AKKERMAN, Petrus, 12107 Berlin (DE); LEMKE, Andreas, 12207 Berlin (DE); BÖNIG, Ingmar, 13503 Berlin (DE)
(74) Vertreter: Wablat, Wolfgang
(86) Internationale Anmeldenummer: PCT/DE2004/001651
(87) Internationale Veröffentlichungsnummer: WO 2005/013229

(56) Entgegenhaltungen:
- WO-A2-03/040657
- DE-A1- 2 809 596
- US-A- 5 294 890

## Beschreibung

Die Erfindung betrifft eine Schaltungsanordnung mit einer Mehrdrahtleitung zur Stromversorgung eines Sensors und zur Ausgabe eines messwertproportionalen Signals über eine Signalleitung an ein Auswertemodul.

Sensoren und Messköpfe für physikalische Größen werden bekanntermaßen über eine Mehrdrahtleitung betrieben. Dabei dienen zwei Leitungen zur Spannungsversorgung und eine weitere Leitung zur Messwertausgabe. Die zu messende physikalische Größe wird im Sensor oder Messkopf in ein elektrisches Signal, beispielsweise einen Strom, umgewandelt. Dieser Messwert wird über eine Signalleitung ausgegeben und an einem Auswertemodul weiterverarbeitet.

Eine bekannte Anordnung mit einer Mehrdrahtleitung zur Versorgung und Messwertausgabe besteht aus einem Messkopf oder Sensor, der mittels einer Dreidrahtleitung mit einem Versorgungs- und Verarbeitungsmodul verbunden ist. Über zwei Stromleitungen wird die Versorgungsspannung des Sensors zur Verfügung gestellt, während über eine weitere Leitung die Messgröße vom Sensor an die Verarbeitungseinheit geliefert wird. Eine Messgröße kann beispielsweise ein Strom sein, der proportional zur zu messenden physikalischen Größe im Sensor durch eine Stromquelle erzeugt wird. Beispielsweise kann die physikalische Größe eine Gaskonzentration sein, die im Sensor in einen Strom umgewandelt wird, der je nach Gaskonzentration unterschiedliche Stromstärken aufweist. Dieser Strom wird über die zweite Leitung an das Auswertemodul geleitet, das anhand des Stromes mittels Schwellwerten ein Alarmsignal auslöst, wenn ein bestimmter Strom überschritten wird. Aufgrund von Leitungswiderständen in den drei Leitungen haben alle drei Anschlüsse des Sensors bestimmte Potentiale bezüglich Masse. Die in Verbindung mit Messköpfen verwendeten Schaltungsanordnungen sind jedoch insofern nachteilig, als bei einem Kurzschluss zwischen den Anschlussleitungen des Sensors der Potentialunterschied zwischen diesen Anschlüssen zu einem Kurzschlussstrom führt, der zum Auswertemodul fließt. Wenn dieser Kurzschlussstrom im Bereich des Messsignals liegt, führt das zu einem falschen Ergebnis, da das Auswertemodul nicht zwischen einem Kurzschlussstrom und einem Messstrom unterscheiden kann.

Der Erfindung liegt die Aufgabe zugrunde, eine Schaltungsanordnung der eingangs erwähnten Art so auszubilden, dass infolge eines Kurzschlusses auftretende Messfehler verhindert werden.

Erfindungsgemäß wird die Aufgabe mit einer Schaltungsanordnung gemäß den Merkmalen des Patentanspruchs 1 gelöst, aus den Unteransprüchen ergeben sich weitere Merkmale und vorteilhafte Ausführungsformen der Erfindung.

Der Grundgedanke der Erfindung besteht mit anderen Worten darin, dass zwischen dem Sensor und dem Auswertemodul eine Schaltungsanordnung verwendet wird, die unterscheiden kann, ob das auf der Ausgangssignalleitung vorhandene Stromsignal ein Messwert ist oder ein durch einen Kurzschluss erzeugtes fehlerhaftes Signal ist. Durch die erfindungsgemäße Anordnung wird durch getakteten Betrieb eines Transistors die Last am Ausgang des Sensors verändert. Bei einem Messsignal, das von einer Stromquelle im Sensor erzeugt wird, hat eine Laständerung keinen Einfluss auf das Signal, da die Stromquelle lastunabhängig arbeitet. Bei einem Kurzschluss hingegen wird der Strom nicht von einer Stromquelle erzeugt, damit ändert sich der Strom auf der Signalleitung bei Änderung der Last. Die Signale bei unterschiedlichen Lasten werden nach Zwischenspeicherung in Pufferkondensatoren mit einem Komparator verglichen. Sind die Signale in zwei aufeinanderfolgenden Takten gleich groß, so handelt es sich um einen Messwert, sind die Signale in zwei aufeinanderfolgenden Takten verschieden, so handelt es sich um ein Fehlerkurzschlussstromsignal. Der Vorteil der erfindungsgemäßen Schaltungsanordnung liegt darin, dass unterschieden werden kann, ob ein Signal auf der Signalleitung von einem physikalischen Ereignis am Sensor stammt oder durch einen Kurzschluss im Sensor bedingt ist.

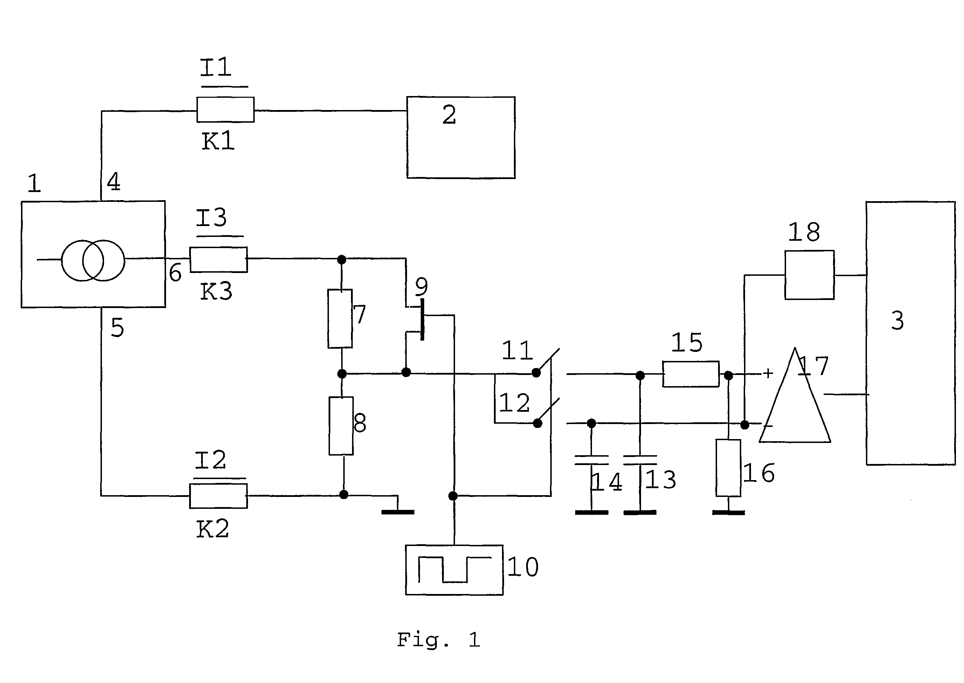

Ein Ausführungsbeispiel der Erfindung wird anhand der Zeichnung, in deren einziger Figur für einen Sensor mit zugehörigem Auswertemodul eine Schaltungsanordnung zu Fehlererkennung infolge Kurzschluss dargestellt ist, erläutert.

Ein Sensor 1 ist über eine Dreileiter-Verkabelung, die die Leitungswiderstände K1, K2 und K3 aufweist und über die die Versorgungsströme I1, I2 bzw. der Messstrom (Ausgangssignal) I3 fließen, mit einer Spannungsquelle 2 zur Versorgung des Sensors mit einer festen Spannung und mit einem Auswertemodul 3 zur Auswertung der vom Sensor gelieferten Ausgangssignale verbunden. Die Versorgung des Sensors 1 mit der festen Spannung erfolgt über die Anschlussklemmen 4 und 5, über die ein Leitungsstrom I1 bzw. I2 fließt. Über die Signalausgangsklemme 6 wird ein durch eine Schaltung im Sensor 1 proportional zu der erfassten physikalischen Größe erzeugtes Stromausgangssignal I3 ausgegeben und letztlich dem Auswertemodul 3 zugeführt. Ein zwischen den Anschlussklemmen 5 und 6 auftretender Kurzschluss bzw. ein dadurch bewirkter Messfehler wird bisher nicht erkannt. Gemäß dem Ausführungsbeispiel umfasst die Schaltungsanordnung zur Erfassung eines kurzschlussbedingten Messfehlers einen ersten Widerstand 7 und einen zu diesem in Reihe geschalteten zweiten Widerstand 8, an dem eine zum Ausgangssignal I3 des Sensors 1 proportionale Spannung abgegriffen wird. Der Zustand, dass sich der resultierende Strom der ein bestimmtes Potential aufweisenden Anschlussklemmen 5 und 6 auf den Leitungswiderstand K3 sowie die Reihenschaltung des Widerstandes K2 und die parallelgeschalteten ersten und zweiten Widerstände 7 und 8 aufteilt, wird jedoch nicht als Fehler erkannt, weil der vom Sensor 1 gelieferte Messstrom (Ausgangssignal) dabei im Normalstrombereich liegt. Die weitere Ausbildung der Schaltung zur Vermeidung eines durch Kurzschluss bedingten Messfehlers nutzt jedoch die Tatsache, das der Messstrom I3 in diesem Fall nicht von einer Stromquelle bereitgestellt wird. Parallel zu dem ersten Widerstand 7 ist daher ein Transistor 9 angebracht, der von einem Taktgeber 10 in bestimmten Takten t1 und t2 abwechselnd leitend und gesperrt geschaltet wird. Darüber hinaus sind in die Schaltungsanordnung ein erster bzw. ein zweiter elektronischer Schalter 11 und 12 eingebunden, die mit dem Takt des Taktgebers 10 im Wechsel geschlossen werden. Der erste Schalter 11 leitet, wenn der Transistor 9 leitend ist, und der zweite Schalter 12 leitet, wenn der Transistor 9 gesperrt ist. Den Schaltern 11 und 12 ist jeweils ein erster Pufferkondensator 13 bzw. ein zweiter Pufferkondensator 14 nachgeschaltet, um bei jeweils geschlossenem ersten bzw. zweiten Schalter 11, 12 die über dem zweiten Widerstand 8 abgegriffene Spannung und damit die über dem jeweiligen ersten oder zweiten Schalter 11, 12 zugeführten Ausgangssignale I3 des Sensors 1 zu speichern. In die Schaltungsanordnung sind vor dem Auswertemodul 3 weiterhin Spannungsteilerwiderstände 15 und 16 sowie anschließend ein Komparator 17 zum Vergleich der in den ersten bzw. zweiten Pufferkondensatoren 13, 14 gespeicherten Spannungswerte der Ausgangssignale I3 und ein Messwertpuffer 18 eingebunden.

Die Funktion der anhand der Zeichnung erläuterten Schaltungsanordnung, die zwischen einem Stromausgangssignal I3 als Messergebnis des Sensors 1 und einem durch einen Kurzschlussstrom bedingten Fehler unterscheidet und derartige Fehler eliminiert, wird nachfolgend beschrieben:

Der Taktgeber 10 schaltet während eines ersten Taktes t1 den Transistor 9 leitend, so dass der erste Widerstand 7 überbrückt und der Messstrom / das Stromausgangssignal I3 nur am zweiten Widerstand 8 einen Spannungsabfall bewirkt. Während dieses ersten Taktes t1 ist der Schalter 12 geöffnet und der Schalter 11 geschlossen, so dass der erzeugte Messwert in dem ersten Pufferkondensator 13 zwischengespeichert wird. Während des zweiten Taktes t2 schaltet der Taktgeber 10 den Transistor 9 sperrend. In diesem Fall erzeugt der Messstrom / das Stromausgangssignal I3 einen Spannungsabfall am ersten und zweiten Widerstand 7 und 8. Bei während dieses Taktes t2 geöffnetem Schalter 11 und geschlossenem Schalter 12 wird der entsprechende Messwert im zweiten Pufferkondensator 14 gespeichert. Die Speicherwerte der Pufferkondensatoren 13, 14 werden zur Fehlerdetektion über die SpannungsteilerWiderstände 15, 16 im Komparator 17 verglichen.

Wenn der Messstrom aus der Stromquelle des Sensors 1 stammt und nicht durch einen Kurzschluss erzeugt wurde, ist der Spannungsabfall am zweiten Widerstand 8 und damit der in den Pufferkondensatoren 13, 14 gespeicherte Wert unabhängig davon, ob der Strom zuvor über den leitend geschalteten Transistor 9 oder den Widerstand 7 fließt, wegen der lastunabhängig arbeitenden Stromquelle gleich groß.

Über die Spannungsteilerwiderstände 15, 16 wird der erste Zwischenwert aus dem ersten Pufferkondensator 13 auf den positiven Eingang (+) des Komparators 17 gegeben, während der zweite Zwischenwert aus dem zweiten Pufferkondensator 14 direkt zum negativen Eingang (-) des Komparators 17 gelangt. Durch die Spannungsteilerwiderstände 15 und 16 ist der positive Eingangswert am Komparator 17 kleiner als der negative Eingangswert, so dass der Komparator 17 kein Fehlersignal liefert und der Wert aus dem Pufferkondensator 14 als fehlerfreier Messwert/Ausgangsstromsignal I3 des Sensors 1 über den Messwertpuffer 18 an das Auswertemodul 3 ausgegeben werden kann.

Stammt das Stromausgangssignal I3 hingegen aus einem Kurzschluss zwischen den Adern bzw. den Anschlussklemmen 4, 5 und 6 des Sensors, so wird der am zweiten Widerstand 8 gemessene Spannungsabfall lastabhängig, da der Kurzschlussstrom nicht aus einer Stromquelle stammt, sondern aus dem Potentialunterschied zwischen den Anschlussklemmen 5 und 6 des Sensors 1 resultiert. Während des Taktes t1 (Transistor 9 leitend, erster Widerstand 7 überbrückt) fällt somit die ganze Spannung am zweiten Widerstand 8 ab und wird im ersten Pufferkondensator 13 zwischengespeichert. Während des Taktes t2 (Transistor 9 sperrend, Spannungsabfall am ersten Widerstand 7) teilt sich die Spannung auf den ersten und den zweiten Widerstand 7 und 8 auf, wobei der Spannungsabfall am zweiten Widerstand 8 im zweiten Pufferkondensator 14 zwischengespeichert wird. Da der im zweiten Pufferkondensator 14 gespeicherte Wert kleiner als der im ersten Pufferkondensator 13 gespeicherte Wert ist, liegt am positiven Komparatoreingang ein größerer Wert an als am negativen Eingang. Der Komparator 17 liefert somit ein von Null verschiedenes, einer Fehlermeldung entsprechendes Ausgangssignal. Der im Messwertpuffer 18 gespeicherte Messwert wird in diesem Fall als fehlerhaft erkannt und nicht im Auswertemodul weiterverarbeitet.

### Bezugszeichenliste:

- 1: Sensor
- 2: Spannungsmodul
- 3: Auswertemodul
- 4: Anschlussklemme
- 5: Anschlussklemme
- 6: Signalausgangsklemme
- 7: erster Widerstand
- 8: zweiter Widerstand
- 9: Transistor
- 10: Taktgeber
- 11: erster elektronischer Schalter
- 12: zweiter elektronischer Schalter
- 13: erster Pufferkondensator
- 14: zweiter Pufferkondensator
- 15: Spannungsteiler-Widerstand
- 16: Spannungsteiler-Widerstand
- 17: Komparator
- 18: Messwertpuffer

- K1, K2, K3: Leitungswiderstände
- I3: Ausgangssignal/Messstrom von 1
- t1, t2: Zeittakte von 10

## Patentansprüche

1. Schaltungsanordnung mit einer Mehrdrahtleitung zur Stromversorgung und zur Ausgabe messwertproportionaler elektrischer Signale eines Sensors über eine Signalleitung an ein Auswertemodul, **dadurch gekennzeichnet, dass** zur Eliminierung kurzschlussbedingter Messfehler an die Signalleitung in Reihe ein erster und zweiter Widerstand (7,8) mit Spannungsabgriff am zweiten Widerstand (8) und einem den ersten Widerstand taktweise überbrückenden, mit einem Taktgeber (10) verbundenen Transistor (9) angeschlossen ist, und den Widerständen (7,8) ein Komparator (17) zum Vergleichen der in den aufeinanderfolgenden Schaltstellungen des Transistors über den zweiten Widerstand (8) erhaltenen Werte und zur Ausgabe einer Kurzschlussfehlermeldung an das Auswertemodul (3) bei in den aufeinanderfolgenden Takten unterschiedlichen Messwerten nachgeschaltet ist.

2. Schaltungsanordnung nach Anspruch 1, **dadurch gekennzeichnet, dass** den Widerständen (7,8) mit dem Taktgeber verbundene erste und zweite elektronische Schalter (11,12) zur im Zeittakt des Taktgebers (10) abwechselnden leitenden Verbindung mit einem ersten oder zweiten Speichermodul, z. B. Pufferkondensator (13,14), zur Zwischenspeicherung der in dem jeweiligen Zeittakt (tl oder t2) bei geschlossenem oder offenem Transistor (9) durch Abgreifen am zweiten Widerstand (8) ermittelten Messwertes nachgeschaltet sind.

3. Schaltungsanordnung nach Anspruch 1 oder 2, **dadurch gekennzeichnet, dass** dem Komparator ein Spannungsteiler mit Spannungsteilerwiderständen (15,16) vorgeschaltet ist.

4. Schaltungsanordnung nach einem der Ansprüche 1 bis 3, **dadurch gekennzeichnet, dass** dem Komparator (17) ein Messwertpuffer (18) zur Zwischenspeicherung des vom Sensor (1) ausgegebenen Messsignals und zur Einspeisung in das Auswertemodul (3) bei kurzschlussfehlerfreier Messung vorgeschaltet ist.

## Claims

1. A circuit arrangement comprising a multi-wire line for supplying current to, and for emitting electric signals from a sensor, the electric signals corresponding to measured values to an evaluation module via a signal line, **characterized in that**, for eliminating measuring errors caused by short circuits, first and second resistors (7, 8) with voltage tap-off at the second resistor (8) and a transistor (9) connected to a clock-pulse generator (10) and bridging the first resistor in a clocked manner are connected in series to the signal line, and **in that** a comparator (17) is provided downstream from the resistors (7, 8) to compare the values received via the second resistor (8) in subsequent switching positions of the transistor and for issuing a short-circuit error message to the evaluation module (3) if measured values in subsequent clock pulses differ.

2. The circuit arrangement according to claim 1, **characterized in that** first and second electronic switches (11, 12) are provided downstream from the resistors (7, 8) that, in sync with the pulses from the clock pulse generator (10), alternately provide a conducting connection to a first or second storage module, respectively, such as buffer condenser (13, 14), for temporary storage of the measured values tapped off the second resistor (8) in the respective clock pulse (tl or t2) with the transistor (9) closed or open.

3. The circuit arrangement according to claims 1 or 2, **characterized in that** a voltage divider with voltage-dividing resistors (15, 16) is provided upstream of the comparator.

4. The circuit arrangement according to claims 1 to 3, **characterized in that** a data buffer (18) for temporary storage of the measuring signal emitted by the sensor (1) and for feeding it to the evaluation module (3) if the measurement was free of short circuits is provided upstream of the comparator (17).

## Revendications

1. Agencement de circuit comprenant une ligne multifilaire pour l'alimentation électrique et pour la fourniture de signaux électriques proportionnels à des valeurs de mesure provenant d'un capteur via une ligne à signaux vers un module d'évaluation, **caractérisé en ce que**, pour éliminer les erreurs de mesure provoquées par des courts-circuits, il est prévu une première et une seconde résistance (7, 8) raccordées en série à la ligne à signaux avec prélèvement de tension au niveau de la seconde résistance (8) et avec un transistor (9) relié à une horloge (10) et court-circuitant de façon cyclique la première résistance, et un comparateur (17) est prévu à la suite des résistances (7, 8) pour comparer les valeurs obtenues dans les positions de commutations successives du transistor via la seconde résistance (8) et pour fournir une annonce d'erreur de court-circuit au module d'évaluation (3) lors de l'apparition de valeurs de mesures différentes dans les cycles successifs.

2. Agencement de circuit selon la revendication 1, **caractérisé en ce qu'**il est prévu à la suite des résistances (7, 8) un premier et un second commutateur électronique (11, 12) reliés à l'horloge pour établir une liaison conductrice alternée selon la cadence de l'horloge (10) vers un premier ou un second module accumulateur, par exemple un condensateur tampon (13, 14) pour le stockage intermédiaire des valeurs de mesure déterminées dans le cycle correspondant (t1 ou t2) par palpage au niveau de la seconde résistance (8) lorsque le transistor (9) est fermé ou ouvert.

3. Agencement de circuit selon la revendication 1 ou 2, **caractérisé en ce qu'**il est prévu avant le comparateur un diviseur de tension avec des résistances de division de tension (15, 16).

4. Agencement de circuit selon l'une des revendications 1 à 3, **caractérisé en ce qu'**il est prévu avant le comparateur (17) un tampon de valeurs de mesure (18) pour le stockage intermédiaire du signal de mesure délivré par le détecteur (1) et pour l'injection dans le module d'évaluation (3) dans le cas de mesures exemptes d'erreurs dues à des courts-circuits.
